# EUROPÄISCHE PATENTSCHRIFT

(11) **EP 1 516 126 B1**
(45) Veröffentlichungstag und Bekanntmachung des Hinweises auf die Patenterteilung: **27.01.2010**
(21) Anmeldenummer: 03732567.7
(22) Anmeldetag: 12.06.2003
(51) Int. Cl.: F16C 1/26

(54) **BOWDENZUG MIT EINEM GEKRÜMMTEN FÜHRUNGSTEIL**
BOWDEN CABLE COMPRISING A CURVED GUIDING PART
CABLE DE BOWDEN DOTE D'UN ELEMENT DE GUIDAGE INCURVE

(30) Priorität: 22.06.2002 DE 10227873
(43) Veröffentlichungstag der Anmeldung: 23.03.2005
(73) Patentinhaber: Bayerische Motoren Werke Aktiengesellschaft, 80809 München (DE)
(72) Erfinder: MOSSLER, Jörg, 85309 Pörnbach (DE)
(86) Internationale Anmeldenummer: PCT/EP2003/006198
(87) Internationale Veröffentlichungsnummer: WO 2004/001239

(56) Entgegenhaltungen:
- US-A- 4 090 329
- US-A- 4 515 035
- US-A- 5 003 837

## Beschreibung

Die Erfindung betrifft einen Bowdenzug mit einem gekrümmten Führungsteil, mit den im Oberbegriff des Patentanspruches 1 angegebenen Merkmalen.

Ein derartiger Bowdenzug weist in der US-A-5 003 837 ein gekrümmtes Führungsteil auf, das über eine lösbare Rasteinrichtung mit einem Befestigungselement verbunden ist. Die Rasteinrichtung sieht einen von dem Befestigungselement abstehenden Rohransatz vor, der axial von dem Seil des Bowdenzuges durchsetzt ist. Der Rohransatz weist an seinem Außenumfang zwei radiale Rastvorsprünge auf, die in eine axiale Stirnöffnung im Führungsteil bis in eine Stützlage einsteckbar sind. In der Stützlage soll das Führungsteil mit dem Befestigungselement verbunden bleiben. Hierzu sind zwei Rastelemente radial gegenüber jeweils in einer zugeordneten radialen, in die axiale Stirnöffnung mündenden Öffnung im Führungsteil radial elastisch befestigt. Jedes Rastelement greift in der Stützlage mit einer Rastnase in eine radiale Mulde zwischen den beiden radialen Rastvorsprüngen am Rohransatz ein. Auf diese Weise sind jedoch in der Stützlage Relativbewegungen des Rohransatzes und damit des Befestigungselements gegenüber dem Führungsteil bereits bei geringen, zwischen dem Befestigungselement und dem Führungsteil wirkenden Kräften und/oder Momenten möglich, die zu störenden Geräuschen führen können. Derartige Bewegungen sind möglich, da der Rohransatz lediglich im äußeren Randbereich der axialen Stirnöffnung im Führungsteil radial gestützt ist und bei Belastungen um diesen Randbereich kippen kann. Auf Grund eines axialen Abstandes der Rastnasen von dem den Rohransatz radial stützenden Randbereich, bewirken bereits geringe, zwischen dem Rohransatz bzw. Befestigungselement und dem Führungsteil wirkende Kräfte bzw. Momente durch Hebelwirkung größere Kräfte bzw. Momente an zumindest einer Rastnase, wodurch diese radial elastisch nach außen verstellt wird. Dabei kann die Rastnase von den radialen Rastvorsprüngen am Rohransatz abgleiten, wodurch diese Rastnase den Rohransatz nicht mehr axial festhält.

Die andere, radial gegenüber angeordnete Rastnase, die bei diesem Vorgang durch eine Vorspannkraft radial nach innen belastet sein kann und dadurch eventuell radial nach innen verstellt wird, kann eventuell noch mit einer Restkraft zwischen die beiden radialen Rastvorsprünge am Rohransatz eingreifen. Bei einer axialen, nicht unwesentlichen Belastung des Rohransatzes aus der axialen Stirnöffnung dürfte jedoch diese Restkraft der Rastnase nicht ausreichend sein, um eine Verlagerung des Rohransatzes aus der axialen Stirnöffnung im Führungsteil zu verhindern. Ist das Führungsteil gegenüber dem Befestigungselement etwa um 90 Grad gedreht, sind die Rastnasen seitlich angeordnet und können bei Biegebewegungen des Führungsteiles bzw. des Befestigungselements gleichzeitig von den beiden radialen Rastvorsprüngen am Rohransatz abgleiten. Das Führungsteil ist in all diesen Fällen dann nicht mehr über die Rasteinrichtung mit dem Befestigungselement verbunden und kann sich deshalb aus der axialen Stirnöffnung heraus verlagern und von dem Befestigungselement entfernen.

Der Erfindung liegt die Aufgabe zu Grunde, einen Bowdenzug mit den Merkmalen im Oberbegriff des Patentanspruches 1 anzugeben, der auch bei höheren Belastungen stabil festgehalten ist.

Diese Aufgabe ist durch die im Patentanspruch 1 angegebenen Merkmale gelöst. Vorteilhafte Ausgestaltungen der Erfindung sind den Unteransprüchen entnehmbar.

Durch die lösbare Befestigung des gekrümmten Führungsteiles mit dem Befestigungselement wird ein modularer Aufbau des Bowdenzuges erreicht, der je nach Anwendungsfall lediglich einen Austausch bzw. eine Auswahl eines entsprechenden Führungsteiles oder Befestigungselements erfordert, die vorzugsweise auf Vorrat gefertigt sind. Beispielsweise kann für alle oder einen größeren Teil der Anwendungen ein gemeinsames Befestigungselement vorgesehen sein, an das lediglich ein an den jeweiligen Anwendungsfall angepasstes gekrümmtes Führungsteil anzuschließen ist. Der Bowdenzug ist vielseitig beispielsweise zwischen einem Türgriff und einem Schlossteil einer Kraftfahrzeugtür verwendbar. Ist der Bauraum durch andere Bauteile eingeengt, so können über das gekrümmte Führungsteil das Seil und ein das Seil umgebender Mantel mehr oder weniger stark von dem anderen Bauteil weg gekrümmt sein. Ist das andere Bauteil durch ein größeres oder kleineres Bauteil zu ersetzen, so kann der Bowdenzug verwendet werden, wenn beispielsweise das gekrümmte Führungsteil durch ein anderes Führungsteil ersetzt wird, das an das jeweils verwendete Bauteil angepasst ist. Die lösbare Verbindung des Führungsteiles mit dem Befestigungselement kann auf unterschiedliche Weise beispielsweise durch eine einfache Rast- oder Arretiereinrichtung gebildet sein.

Ein Ausführungsbeispiel der Erfindung wird anhand einer Zeichnung näher erläutert.
Es zeigen
- Figur 1: eine vereinfachte Ansicht von einem Ende des montierten Bowdenzugs,
- Figur 2: eine vergrößerte Seitenansicht von dem Befestigungselement und
- Figur 3: eine vergrößerte Seitenansicht von dem Führungsteil.

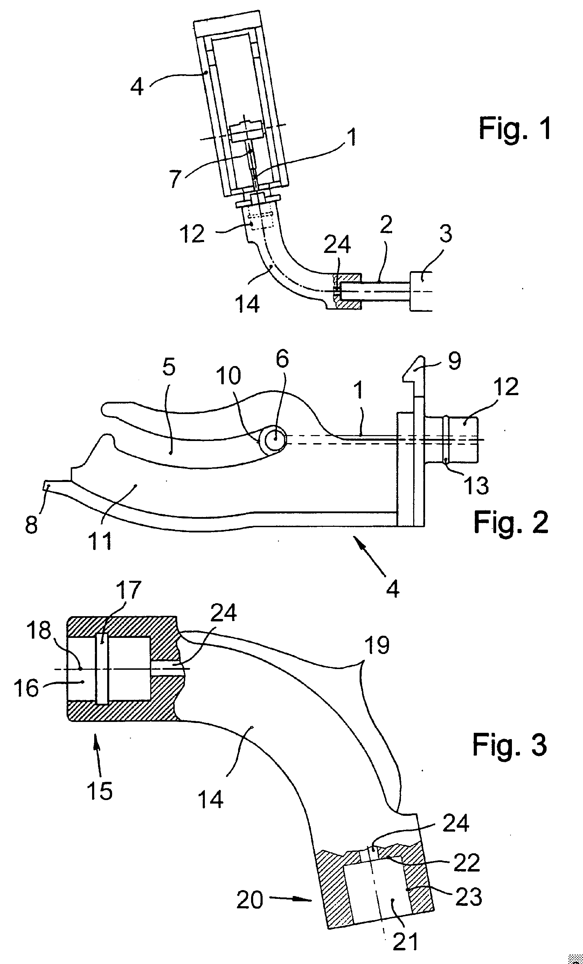

Der in Figur 1 vereinfacht dargestellte Bowdenzug überträgt die Schwenkbewegung eines Innengriffes an einer Fahrzeugtür auf einem Betätigungshebel eines Türschlosses, wobei in der Figur lediglich der Endbereich des Bowdenzuges dargestellt ist, der dem Innengriff zugeordnet ist. Der Bowdenzug weist ein Seil 1 auf, das von einem flexiblen Seilmantel 2 umgeben ist. Zumindest bereichsweise ist der Seilmantel 2 von einer Geräuschisolierung 3 umgeben, die ein hartes und eventuell geräuschvolles Scheuern des Seilmantels 2 an einer Türwand verhindern soll, wenn der Innengriff betätigt wird. Der Bowdenzug weist ein in Figur 2 vergrößert dargestelltes Befestigungselement 4 auf, das als Kunststoffteil einstückig gefertigt in eine Aufnahmeöffnung in einer Griffschale einsteckbar ist, die den Innengriff schwenkbar lagert und mit der Fahrzeugtür lösbar verbunden ist. Das Befestigungselement 4 weist zwei mit Abstand seitlich gegenüber liegende Seitenwände 11 auf, in denen jeweils eine kreisbogenförmige Führung 5 ausgebildet ist, in denen ein Führungsbolzen 6 längs verstellbar geführt ist. Der Führungsbolzen 6 ist mit dem verstärkt ausgebildeten Seilende 7 des Seiles 1 verbunden. Nach dem Einstecken des Befestigungselements 4 in die Aufnahmeöffnung der nicht dargestellten Griffschale bis in eine Gebrauchslage hintergreift ein Vorsprung 8 an dem Befestigungselement 4 eine Stützschulter an der Griffschale und eine Rastnase 9 an dem Befestigungselement 4 ist in eine Rastausnehmung an der Griffschale eingerastet, wodurch das Befestigungselement 4 an der Fahrzeugtür befestigt ist. In der Gebrauchslage des Befestigungselements 4 hintergreift ein Mitnehmer an einem Hebelarm des nicht dargestellten Türgriffes einen Mittelbereich 10 des Führungsbolzens 6, der im Querschnitt kreisförmig und im Durchmesser größer als die seitlichen Führungsbolzen 6 ausgebildet ist.

Das Befestigungselement 4 weist einen in Figur 2 erkennbaren abstehenden Rohransatz 12 auf, der von dem Seil 1 axial durchsetzt ist. An seinem axial mittleren Bereich weist der Rohransatz 12 einen radial vorstehenden Rastvorsprung 13 auf, der ringförmig geschlossen über den Umfang des Rohransatzes 12 verläuft.

Mit dem Befestigungselement 4 ist das in Figur 3 in einer Seitenansicht vergrößert und teilweise geschnitten dargestellte gekrümmte Führungsteil 14 lösbar zu verbinden. Hierzu weist der dem Befestigungselement 4 zugewandte Stirnbereich 15 des Führungsteiles 14 eine axiale zylindrische Stirnöffnung 16 auf, die einen etwas größeren Durchmesser als der Außendurchmesser des Rohransatzes 12 neben dem Rastvorsprung 13 aufweist. Im axial mittleren Bereich der Stirnöffnung 16 ist eine ringförmige radiale Vertiefung 17 ausgebildet, in die der Rastvorsprung 13 radial eingreift, wenn das Führungsteil 14 mit der Stirnöffnung 16 bis in eine Stützlage auf den Rohransatz 12 des Befestigungselements 4 axial aufgesteckt ist. Damit das Führungsteil 14 auf den Rohransatz 12 des Befestigungselements 4 aufsteckbar ist, sind die Stirnöffnung 16 und/oder der Rastvorsprung 13 derart radial elastisch ausgebildet, dass sich der eine größere radiale Erstreckung als die Stirnöffnung 16 aufweisende Rastvorsprung 13 und damit der Rohransatz 12 bis in die Stützlage in die Stirnöffnung 16 des Führungsteiles 14 axial einbringen lassen.

Über die Rastverbindung sind in der Rastlage das Führungsteil 14 und das Befestigungselement 4 lösbar verbunden. Durch eine entsprechende axiale Kraft können die Teile voneinander gelöst werden, wobei sich die Stirnöffnung 16 und/oder der Rastvorsprung 13 entsprechend elastisch verformen, um einen Austritt des Rastvorsprungs 13 am Rohransatz 12 aus der Vertiefung 17 der Stirnöffnung 16 zu ermöglichen. In der Figur 1 entsprechenden Rastlage kann das Führungsteil 14 um die Mittelachse 18 der Stirnöffnung 16 eine Drehbewegung ausführen, wobei eventuell vorher ein Stützteil zur Abstützung des Seilmantels 2 zu entfernen ist. Die Möglichkeit einer derartigen Drehbewegung kann beispielsweise genutzt werden, um den Bowdenzug an einer linken und rechten Fahrzeugtür verschwenden zu können. In diesem Fall können gleiche Befestigungselemente 4 und gleiche Führungsteile 14 verwendet werden, wobei lediglich die Führungsteile 14 in um etwa 180 Grad unterschiedlichen Einbaulagen zu verwenden sind. Die Mittelachse 18 der Stirnöffnung 16 im Führungsteil 14 verläuft koaxial mit dem Seil 1, das dann entlang der gekrümmten Mittelachse des Führungsteiles 14 in einer Seilführung 24 im Führungsteil 14 verläuft. Aus Fertigungsgründen ist die Seilführung 24 im radial äußeren Krümmungsbereich 19 des Führungsteiles 14 radial nach außen offen ausgebildet. An dem vom Befestigungselement 4 abgewandten Stirnbereich 20 des Führungsteiles 14 ist eine Aufnahmeöffnung 21 ausgebildet, in die das zugewandte Ende des Seilmantels 2 axial eingesteckt ist, wobei sich der Seilmantel 2 axial an der Bodenfläche 22 der Aufnahmeöffnung 21 abstützt. Der zylindrische Innenumfang 23 der Aufnahmeöffnung 21 stützt einen zylindrischen Umfangsbereich des Seilmantels 2.

Das Führungsteil kann formstabil oder etwas elastisch nachgiebig ausgebildet und über eine beliebige Rast- oder Arretiereinrichtung lösbar mit dem Befestigungselement verbunden sein. Über das Führungsteil kann ein erforderlicher Krümmungsradius des Seiles bzw. der Litze des Bowdenzuges erzwungen werden. Das andere Ende des Bowdenzuges kann in einer zum Ausführungsbeispiel vergleichbaren oder anderen Weise abgestützt sein. Das Befestigungselement und das Führungsteil können aus unterschiedlichen oder gleichen Materialien beispielsweise aus Kunststoff gefertigt sein. Unter dem gekrümmten Führungsteil ist auch ein Führungsteil zu verstehen, das gegenüber einer Anschlussachse des Befestigungselements abgewinkelt ist oder einen abgewinkelten und/oder gekrümmten Bereich aufweist.

## Patentansprüche

1. Bowdenzug mit einem gekrümmten Führungsteil (14), das über eine lösbare Rasteinrichtung mit einem Befestigungselement (4) verbunden ist, wobei die Rasteinrichtung einen von dem Befestigungselement (4) abstehenden Rohransatz (12) aufweist, der axial von dem Seil (1) des Bowdenzuges durchsetzt ist, und der Rohransatz (12) an seinem axial mittleren Außenumfang einen radialen Rastvorsprung (13) aufweist, der in eine axiale zylindrische Stirnöffnung (16) im Führungsteil (14) bis in eine Stützlage einsteckbar ist, **dadurch gekennzeichnet, dass** in der Stützlage der Rastvorsprung (13) radial elastisch in eine radiale Vertiefung (17) in der Stirnöffnung (16) des Führungsteiles (14) kraft- und/oder formschlüssig eingreift, und der Rastvorsprung (13) am Rohransatz (12) des Befestigungselements (4) und/oder die Stirnöffnung (16) im Führungsteil (14) derart radial elastisch ausgebildet ist bzw. sind, dass sich durch elastische Verformung des Rastvorsprunges (13) und/oder der Stirnöffnung (16) der eine etwas größere radiale Erstreckung als die Stirnöffnung (16) aufweisende Rastvorsprung (13) zusammen mit dem Rohransatz (12) in die Stirnöffnung (16) axial bis in die Stützlage einbringen lässt.

2. Bowdenzug nach Anspruch 1, **dadurch gekennzeichnet, dass** das Führungsteil (14) mit dem Befestigungselement (4) derart lösbar verbunden ist, dass sich das Führungsteil (14) gegenüber dem Befestigungselement (4) um eine Drehachse (Mittelachse 18) verdrehen lässt.

3. Bowdenzug nach Anspruch 2, **dadurch gekennzeichnet, dass** die Drehachse (Mittelachse 18) etwa mit der Mittelachse des Seiles (1) des Bowdenzuges koaxial verläuft.

4. Bowdenzug nach einem der Ansprüche 1 bis 3, **dadurch gekennzeichnet, dass** der Bowdenzug wenigstens zwei austauschbare Führungsteile (14) aufweist, die für unterschiedliche Anwendungen unterschiedliche Seile (1) abstützen können und/oder unterschiedliche Krümmungen aufweisen und jedes der austauschbaren Führungsteile (14) mit einem gemeinsamen Befestigungselement (4) lösbar zu verbinden sind.

5. Bowdenzug nach einem der Ansprüche 1 bis 4, **dadurch gekennzeichnet, dass** das Seil (1) des Bowdenzuges von einem flexiblen Seilmantel (2) umgeben ist, der sich axial an einer Stützfläche (Bodenfläche 22) des Führungsteiles (14) abstützt.

6. Bowdenzug nach Anspruch 5, **dadurch gekennzeichnet, dass** an der dem Befestigungselement (4) abgewandten Stirnseite des Führungsteiles (14) eine Aufnahmeöffnung (21) ausgebildet ist, in die der Seilmantel (2) bis zum Anliegen an der Bodenfläche (22) der Aufnahmeöffnung (21) axial einsteckbar ist und der Innenumfang (23) der Aufnahmeöffnung (21) einen zylindrischen Umfangsbereich des Seilmantels (2) radial stützt.

## Claims

1. A Bowden cable with a curved guide part (14), which is connected to a fastening element (4) by means of a detachable latching device, the latching device having a pipe socket (12) which projects from the fastening element (4) and has a wire (1) of the Bowden cable passing through it axially, and the pipe socket (12), on its axially central outer periphery, has a radial latching projection (13), which can be inserted in an axial cylindrical end opening (16) in the guide part (14) up to a supporting position, **characterised in that**, in the supporting position, the latching projection (13) engages radially elastically, in a non-positive and/or positive manner, in a radial recess (17) in the end opening (16) of the guide part (14), and the latching projection (13) on the pipe socket (12) of the fastening element (4) and/or the end opening (16) in the guide part (14) is/are radially elastically formed in such a way that owing to the elastic deformation of the latching projection (13) and/or the end opening (16), the latching projection (13), which has a slightly larger radial extent than the end opening (16), can be introduced axially, together with the pipe socket (12), into the end opening (16) up to the supporting position.

2. A Bowden cable according to claim 1, **characterised in that** the guide part (14) is detachably connected to the fastening element (4) in such a way that the guide part (14) can be rotated relative to the fastening element (4) about a rotational axis (centre axis 18).

3. A Bowden cable according to claim 2, **characterised in that** the rotational axis (centre axis 18) extends approximately coaxially with the centre axis of the wire (1) of the Bowden cable.

4. A Bowden cable according to any one of claims 1 to 3, **characterised in that** the Bowden cable has at least two exchangeable guide parts (14), which, for different applications, can support different wires (1) and/or have different curvatures and each of the exchangeable guide parts (14) are to be detachably connected to a common fastening element (4).

5. A Bowden cable according to any one of claims 1 to 4, **characterised in that** the wire (1) of the Bowden cable is surrounded by a flexible wire sheathing (2), which is supported axially on a support face (base face 22) of the guide part (14).

6. A Bowden cable according to claim 5, **characterised in that** formed on the end face of the guide part (14) remote from the fastening element (4) is a receiving opening (21), into which the wire sheathing (2) can be axially inserted until it rests on the base face (22) of the receiving opening (21) and the inner periphery (23) of the receiving opening (21) radially supports a cylindrical peripheral region of the wire sheathing (2).

## Revendications

1. Câble Bowden comportant une pièce de guidage (14) cintrée, reliée à un élément de fixation (4) par une installation d'encliquetage amovible, l'installation d'encliquetage comportant un embout tubulaire (12) dépassant de l'élément de fixation (4), cet embout étant traversé axialement par le câble (1) du câble Bowden, et l'embout tubulaire (12) comporte sur sa périphérie extérieure, axiale, moyenne, une partie d'encliquetage en saillie (13), radiale, pour s'engager dans une ouverture frontale cylindrique axiale (16) de la pièce de guidage (14) jusqu'à venir dans une position d'appui,
**caractérisé en ce qu'**
en position d'appui, la partie d'encliquetage en saillie (13) pénètre de manière élastique radialement dans une cavité radiale (17) de l'ouverture frontale (16) de la pièce de guidage (14) par une liaison par la force et/ ou la forme, et
la partie d'encliquetage en saillie (13) est réalisée élastiquement dans la direction radiale, sur l'embout tubulaire (12) de l'élément de fixation (4) et/ou l'ouverture frontale (16) de la pièce de guidage (14), de façon que par la déformation élastique de la partie d'encliquetage en saillie (13) et/ou l'ouverture frontale (16), la partie d'encliquetage en saillie (13) qui a une dimension radiale sensiblement plus grande que l'ouverture frontale (16), puisse s'introduire axialement avec l'embout tubulaire (12) dans l'ouverture frontale (16), jusque dans la position d'appui.

2. Câble Bowden selon la revendication 1,
**caractérisé en ce que**
la pièce de guidage (14) est reliée de manière amovible à l'élément de fixation (4) de façon que la pièce de guidage (14) puisse être tournée par rapport à l'élément de fixation (4) autour d'un axe de rotation (axe central 18).

3. Câble Bowden selon la revendication 2,
**caractérisé en ce que**
l'axe de rotation (axe central 18) passe sensiblement coaxialement à l'axe central du câble (1) du câble Bowden.

4. Câble Bowden selon les revendications 1 à 3,
**caractérisé en ce que**
le câble Bowden comporte au moins deux pièces de guidage (14) remplaçables, permettant de soutenir des câbles différents (1) selon différentes applications et/ou avoir des courbures différentes, et chaque pièce de guidage (14), remplaçable, est reliée de manière amovible à un élément de fixation (4), commun.

5. Câble Bowden selon les revendications 1 à 4,
**caractérisé en ce que**
le câble (1) du câble Bowden est entouré par une gaine (2), souple, qui s'appuie axialement contre une surface d'appui (fond 22) de la pièce de guidage (14).

6. Câble Bowden selon la revendication 5,
**caractérisé en ce que**
la face frontale de la pièce de guidage (14) à l'opposé de l'élément de fixation (4), comporte un orifice de réception (21) dans lequel s'engage axialement la gaine (2) jusqu'à venir en appui contre le fond (22) de l'orifice de réception (21), et la périphérie intérieure (23) de l'orifice de réception (21) appuie radialement la zone périphérique cylindrique de la gaine (2).
